# EUROPÄISCHE PATENTSCHRIFT

(11) **EP 1 445 989 B1**
(45) Veröffentlichungstag und Bekanntmachung des Hinweises auf die Patenterteilung: **22.03.2006**
(21) Anmeldenummer: 04000340.2
(22) Anmeldetag: 09.01.2004
(51) Int. Cl.: H05B 37/02, G05D 25/02

(54) **Schaltungsanordnung und Verfahren für eine Beleuchtungseinrichtung mit einstellbarer Farbe und Helligkeit**
Circuit and method for a lighting device with controllable colour temperature and intensity
Circuit et méthode pour un luminaire à température de couleur et intensité réglable

(30) Priorität: 06.02.2003 DE 10304875
(43) Veröffentlichungstag der Anmeldung: 11.08.2004
(73) Patentinhaber: Patent-Treuhand-Gesellschaft für elektrische Glühlampen mbH, 81543 München (DE)
(72) Erfinder: Boulouednine, Mourad, 81397 München (DE); Faller, Alexander, 85221 Dachau (DE)

(56) Entgegenhaltungen:
- EP-A- 1 152 642
- DE-A- 10 051 528
- DE-U- 20 002 060
- DE-U- 20 007 134
- US-A- 6 016 038
- US-A1- 2002 048 177

## Beschreibung

### Technisches Gebiet

Die Erfindung geht aus von einer Schaltungsanordnung gemäß dem Oberbegriff des Anspruchs 1. Es handelt sich dabei insbesondere um eine Schaltungsanordnung, die in einer Beleuchtungseinrichtung die Einstellung sowohl der Farbe, als auch der Helligkeit von abgestrahltern Licht ermöglicht.

### Stand der Technik

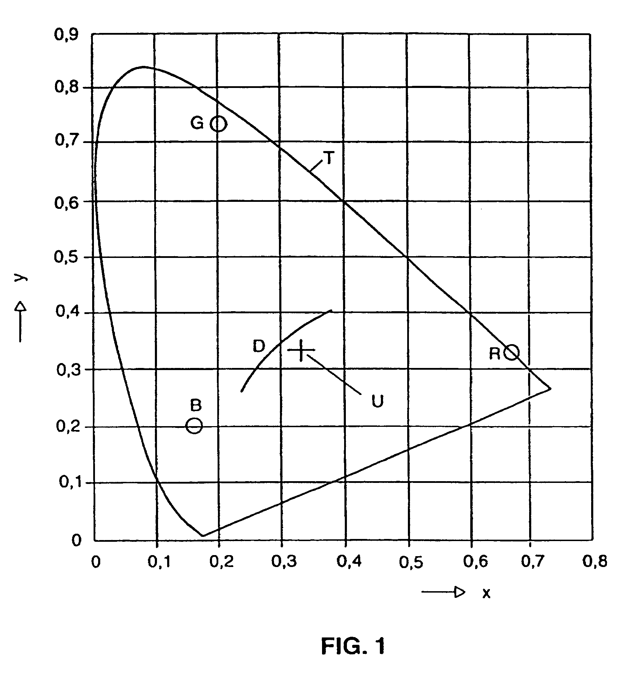

Die Farbe einer Lichtquelle, in der Literatur auch Farbart genannt, wird im allgemeinen über eine Normfarbtafel bestimmt. Diese Normfarbtafel ist in der Norm DIN 5033 oder in der äquivalenten internationalen Norm CIE 1931 definiert. In der Normfarbtafel wird eine Farbe durch eine x- und eine y-Koordinate festgelegt. In Figur 1 ist eine Normfarbtafel dargestellt. Alle für einen Menschen sichtbaren Farben liegen innerhalb eines Farbdreiecks T. Ein sog. Unbunt-Punkt U ist durch die Koordinaten x=0,33 und y=0,33 festgelegt. Farben im Bereich um den Unbunt-Punkt U werden im allgemeinen als weiß empfunden. Die Farben, die das Tageslicht während eines Tagesablaufs einnimmt liegen auf einer sog. D-Linie D.
Um eine Beleuchtungseinrichtung bereitzustellen, die in der Lage ist, Licht mit einstellbarer Farbe, z. B. der Farben, die auf der D-Linie liegen, abzustrahlen, sind in der Beleuchtungseinrichtung drei Lichtquellen unterschiedlicher Farbe notwendig. Die drei Lichtquellen liegen mit ihren Farben beispielsweise auf den, in Figur 1 dargestellten Punkten B, G, R. Dabei liegt im Beispiel der Punkt B im blauen Bereich der Normfarbtafel, Punkt G im grünen Bereich und Punkt R im roten Bereich. Durch Einstellen der Helligkeit der drei Lichtquellen kann die Beleuchtungseinrichtung alle Farben abstrahlen, die innerhalb des Dreiecks BGR liegen, das durch die drei Punkte B, G und R aufgespannt wird. Nach dem Stand der Technik ist für eine beschriebene Beleuchtungseinrichtung eine Schaltungsanordnung nötig, die für jede der drei Lichtquellen eine Leistungsversorgung enthält. Zum Anschluss der drei Lichtquellen, sind mindestens vier Verbindungsleitungen nötig, dies bei einem gemeinsamen Bezugspotenzial für alle drei Lichtquellen.
Jede der drei Leistungsversorgungen benötigt eine Einstellvorrichtung zum Einstellen der Helligkeit der Lichtquellen. Soll die Helligkeit des von der Beleuchtungseinrichtung abgestrahlten Lichts eingestellt werden, ohne dass sich dessen Farbe wesentlich ändert, so müssen die drei Einstellvorrichtungen gleichzeitig betätigt werden, oder es muß eine vierte Einstellvorrichtung bereitgestellt werden. Diese vierte Einstellvorrichtung muß eine gleichzeitige Einstellung der Leistungsabgabe aller drei Leistungsversorgungen ermöglichen.
Im Stand der Technik hat es sich als nachteilig erwiesen, dass zum Bereitstellen der oben beschriebenen Lichtfarben ein erheblicher Aufwand erforderlich ist, und eine komfortable Einstellung von Farbe und Helligkeit nicht ohne Zusatzaufwand möglich ist.

In DE 100 51 528 A1 (Lindner) ist ein Steuergerät für ein Beleuchtungssystem beschrieben. Das Steuergerät weist vier Bedienelemente auf, wobei eines die Gesamthelligkeit steuert und die drei übrigen jeweils eine der Farben Rot, Grün oder Blau steuert.
In US 2002 0048177 A1 (Rahm) ist eine Vorrichtung beschrieben, die weisse Leuchtdioden und farbige Leuchtdioden umfasst. Dem Licht der weissen Leuchtdioden wird Licht der farbigen Leuchtdioden beigemischt. Damit kann die Farbtemperatur des gesamten Lichts, das von der Vorrichtung abgestrahlt wird, eingestellt werden.

### Darstellung der Erfindung

Es ist Aufgabe der vorliegenden Erfindung, ein Schaltungsanordnung gemäß dem Oberbegriff des Anspruchs 1 bereitzustellen, die eine Einstellung von Farbe und Helligkeit einer Beleuchtungseinrichtung mit geringem Aufwand bewerkstelligt.
Eine weitere Aufgabenstellung der vorliegenden Erfindung besteht darin, die Einstellung der Farbe einer Beleuchtungseinrichtung mit geringem Aufwand bereit zu stellen, wobei die einstellbaren Farben auf einer Linie in der Normfarbtafel liegen.
Eine weitere Aufgabenstellung der vorliegenden Erfindung besteht darin, die Einstellung von Farbe und Helligkeit einer Beleuchtungseinrichtung komfortabel zu gestalten.
Diese Aufgaben werden durch eine Schaltungseinrichtung mit den Merkmalen des Oberbegriffs des Anspruchs 1 durch die Merkmale des kennzeichnenden Teils des Anspruchs 1 gelöst. Besonders vorteilhafte Ausgestaltungen finden sich in den abhängigen Ansprüchen.
Eine erfindungsgemäße Schaltungsanordnung besitzt eine Anschlussvorrichtung für eine erste und eine zweite Gruppe von Lichtquellen. Da für beide Gruppen ein gemeinsames Bezugspotenzial bereitgestellt werden kann, genügen drei elektrische Verbindungsleitungen von der Schaltungsanordnung zu den zwei Gruppen von Lichtquellen.
Da nur zwei Gruppen von Lichtquellen von der Schaltungsanordnung zu versorgen sind, besitzt eine erfindungsmäßige Schaltungsanordnung nur eine erste und eine zweite Leistungsversorgung. Beide Leistungsversorgungen sind einstellbar, wobei die erste Leistungsversorgung eine einstellbare Leistungsabgabe an die erste Gruppe von Lichtquellen ermöglicht und die zweite Leistungsversorgung eine einstellbare Leistungsabgabe an die zweite Gruppe von Lichtquellen ermöglicht.
Zur Einstellung der Leistungsabgabe der Leistungsversorgungen besitzt die Schaltungsanordnung eine erste und eine zweite Einstellvorrichtung.
Erfindungsgemäß ist mit der ersten Einstellvorrichtung die Leistungsabgabe der ersten und gleichzeitig der zweiten Leistungsversorgung einstellbar, während mit der zweiten Einstellvorrichtung lediglich die Leistungsabgabe der zweiten Leistungsversorgung einstellbar ist.
Im allgemeinen arbeitet die Schaltungsanordnung als Teil einer Beleuchtungseinrichtung, mit einer ersten und eine zweiten Gruppe von Lichtquellen, wobei die erste Gruppe von Lichtquellen eine erste Farbe abstrahlt und die zweite Gruppe von Lichtquellen eine zweite Farbe abstrahlt. Die erste und die zweite Farbe können als erster und.zweiter Punkt in der Normfarbtafel eingetragen werden. Bevorzugt sind die beiden Farben unterschiedlich, wodurch sich in der Normfarbtafel eine erste Verbindungslinie zwischen den beiden Punkten eintragen lässt. Auf dieser ersten Verbindungslinie liegen alle Farben, die die Beleuchtungseinrichtung abgeben kann.
Mit der ersten Einstellvorrichtung wird erfindungsgemäß die Leistungsabgabe der ersten und gleichzeitig der zweiten Leistungsversorgung und damit gleichzeitig die Helligkeit der ersten und der zweiten Gruppe von Lichtquellen eingestellt. Die erste Einstellvorrichtung ermöglicht somit eine Veränderung der Helligkeit der Beleuchtungseinrichtung, ohne die von der Beleuchtungseinrichtung abgegebene Farbe wesentlich zu beeinflussen.
Mit der zweiten Einstellvorrichtung wird erfindungsgemäß lediglich die Leistungsabgabe der zweiten Leistungsversorgung und damit die Helligkeit zweiten Gruppe von Lichtquellen eingestellt. Die zweite Einstellvorrichtung ermöglicht somit eine Veränderung der von der Beleuchtungseinrichtung abgegebenen Farbe.
Erfindungsgemäß umfasst die erste Einstellvorrichtung ein erstes und ein zweites Potentiometer enthält, die miteinander gekoppelt sind, wobei mit dem ersten Potentiometer die Leistungsabgabe der ersten Leistungsversorgung einstellbar ist und mit dem zweiten Potentiometer die Leistungsabgabe der zweiten Leistungsversorgung einstellbar ist, während die zweite Einstellvorrichtung ein Potentiometer enthält, das parallel zum zweiten Potentiometer der ersten Einstellvorrichtung geschaltet ist.

Die Farbe der ersten und der zweiten Gruppe von Lichtquellen muß so gewählt werden, dass auf der ersten Verbindungslinie alle Farben liegen, die von der Beleuchtungseinrichtung abgegeben werden sollen. Eine Lichtquelle ist jedoch im allgemeinen nicht mit einer beliebigen Farbe erhältlich, was zunächst einer beliebigen Lage der ersten Verbindungslinie entgegensteht.

Deshalb ist es vorteilhaft, dass sich mindestens eine Gruppe von Lichtquellen aus verschieden farbigen Untergruppen von Lichtquellen zusammensetzt. Ohne Verlust der Allgemeingültigkeit sei nun die erste Gruppe von Lichtquellen aus einer ersten und einer zweiten Untergruppe mit einer dritten und einer vierten Farbe zusammengesetzt. Die dritte und die vierte Farbe werden in der Normfarbtafel durch einen dritten und einen vierten Punkt repräsentiert, zwischen die eine zweite Verbindungslinie gelegt werden kann.

Der oben genannte erste Punkt in der Normfarbtafel liegt auf der zweiten Verbindungslinie. Die Lage des ersten Punkts kann durch das Verhältnis der Helligkeit der ersten und der zweiten Untergruppe von Lichtquellen bestimmt werden. Damit kann die erste Verbindungslinie in eine gewünschte Lage gebracht werden.

### Kurze Beschreibung der Zeichnungen

Im folgenden soll die Erfindung anhand von Ausführungsbeispielen unter Bezugnahme auf Zeichnungen näher erläutert werden. Es zeigen:
- Figur 1: eine Normfarbtafel (Beschreibung dazu im Abschnitt zum Stand der Technik),
- Figur 2: Blockschaltbild einer bevorzugten Ausführung der Erfindung,
- Figur 3: eine Normfarbtafel mit beispielhaft eingetragenen Punkten für die Farben der Lichtquellen einer bevorzugten Ausführung der Erfindung,
- Figur 4: Spektrum des von einer bevorzugten Ausführung der Erfindung abgestrahlten Lichts mit unterschiedlicher Einstellung der zweiten Einstellvorrichtung.

### Bevorzugte Ausführung der Erfindung

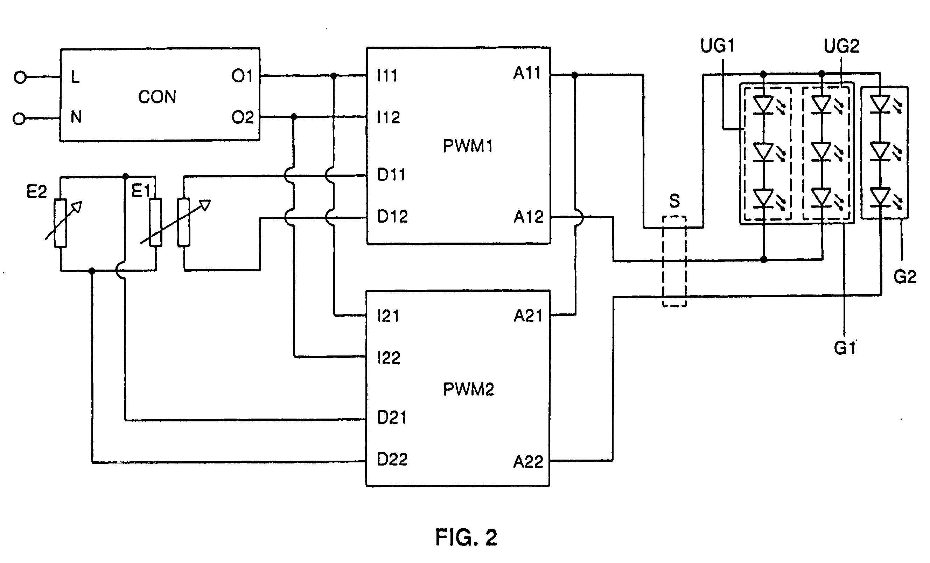

In Figur 2 ist ein Blockschaltbild einer bevorzugten Ausführung der Erfindung dargestellt. Das Blockschaltbild zeigt eine bevorzugte Ausführung einer Schaltungsanordnung mit angeschlossenen Lichtquellen.

Ein Spannungswandler CON bezieht über Anschlüsse L und N Energie von einer nicht dargestellten Energiequelle, die beispielsweise durch eine Netzspannung oder eine Batterie realisiert ist. Der Spannungswandler CON stellt an seinen Anschlüssen O1 und O2 eine Betriebsspannung zur Verfügung, die geeignet ist zum Betrieb von an die Schaltungsanordnung angeschlossenen Lichtquellen.

Die Betriebsspannung wird eingespeist in eine erste und eine zweite Dimmeinrichtung (PWM1, PWM2) über die Anschlüsse I1 und I12 bzw. I21 und I22. Die erste Dimmeinrichtung PWM1 besitzt zwei Anschlüsse A11 und A12, an die eine erste Gruppe G1 von Lichtquellen angeschlossen ist. Die zweite Dimmeinrichtung PWM2 besitzt zwei Anschlüsse A21 und A22, an die eine zweite Gruppe G2 von Lichtquellen angeschlossen ist.

Im dargestellten Ausführungsbeispiel ist der Anschluss A21 mit dem Anschluss A11 verbunden. Beide Gruppen von Lichtquellen besitzen dadurch ein gemeinsames Bezugspotenzial, das den Lichtquellen nur einmal zugeführt werden muss. Vorteilhaft sind deshalb nur drei Anschlussleitungen von der Schaltungsanordnung zu den Lichtquellen nötig. Die Anschlussleitungen können steckbar über eine Anschlussvorrichtung S ausgeführt sein. Als gemeinsames Bezugspotenzial ist im Ausführungsbeispiel das Potenzial des Anschlusses A11 gewählt. Bei entsprechender interner Verschaltung der Dimmeinrichtungen PWM1 und PWM2 ist eine Verbindung von A11 und A21 bereits durch die Verbindung von I11 zu I21 oder die Verbindung von I12 zu I22 gegeben. Eine Verbindung von A11 zu A21 ist dann nicht mehr nötig.

Der Spannungswandler CON bildet zusammen mit der Dimmeinrichtung PWM1 die Leistungsversorgung der ersten Gruppe von Lichtquellen. Weiterhin bildet der Spannungswandler CON zusammen mit der Dimmeinrichtung PWM2 die Leistungsversorgung der zweiten Gruppe von Lichtquellen. Unter zusätzlichem Aufwand ist es auch möglich, für jede Dimmeinrichtung PWM1, PWM2 einen separaten Spannungswandler einzusetzen.

Die Dimmeinrichtungen PWM und PWM2 besitzen jeweils ein Paar von Anschlüssen D11, D12 beziehungsweise D21, D22 über die die Möglichkeit besteht, die Leistungsabgabe an die jeweilige Gruppe von Lichtquellen einzustellen. Bei manueller Einstellung ist eine Ausführung der Einstellmöglichkeit mit Potentiometern vorteilhaft, da nur ein geringer Aufwand für Einstellvorrichtungen nötig ist. Grundsätzlich ist jedoch auch eine andere Ausführung der Einstellmöglichkeit einsetzbar, wie z.B. über variable Spannungs- oder Stromquellen oder über digitale Befehlssequenzen.

Eine erste Einstellvorrichtung E1 besteht aus zwei Potentiometern, die gleichzeitig bedient werden. Eine derartige Anordnung wird auch als Tandem- oder Stereopotentiometer bezeichnet. Ein Potentiometer dieses Tandempotentiometers ist mit den Anschlüssen D11 und D12 verbunden, wodurch die Leistungsabgabe der Dimmeinrichtung PWM1 einstellbar ist. Das andere Potentiometer dieses Tandempotentiometers ist mit den Anschlüssen D21 und D22 verbunden, wodurch die Leistungsabgabe der Dimmeinrichtung PWM2 einstellbar ist. Damit führt eine Betätigung der ersten Einstellvorrichtung E1 zu einer Veränderung der Helligkeit der ersten und der zweiten Gruppe von Lichtquellen zugleich. Dies bedeutet eine Helligkeitsänderung des von der Beleuchtungseinrichtung abgegebenen Lichts ohne Farbänderung.

Eine zweite Einstellvorrichtung E2 besteht aus einem Potentiometer. Dieses Potentiometer ist mit den Anschlüssen D21 und D22 verbunden, wodurch die Leistungsabgabe der Dimmeinrichtung PWM2 einstellbar ist. Damit führt eine Betätigung der zweiten Einstellvorrichtung E2 zu einer Veränderung der Helligkeit der zweiten Gruppe von Lichtquellen. Dies bedeutet eine Änderung der Farbe des von der Beleuchtungseinrichtung abgegebenen Lichts.

Die beschriebene Verschaltung der Einstellvorrichtungen bedeutet, dass das Potentiometer der zweiten Einstellvorrichtung E2 parallel zum dem Potentiometer der erste Einstellvorrichtung E1 geschaltet ist, das mit der zweiten Dimmeinrichtung PWM2 verbunden ist. Damit die Wirkung der Potentiometer beeinflusst werden kann, können seriell und/oder parallel zu den Potentiometern Widerstände geschaltet werden.

Zur Einstellung der Leistungsabgabe ist in den Dimmeinrichtungen PWM1 und PWM2 vorteilhaft die Pulsweitenmodulation gewählt. Diese arbeitet mit geringer Verlustleistung. Besonders geeignet ist die Pulsweitenmodulation in Kombination mit Leuchtdioden als Lichtquellen.

Im Ausführungsbeispiel nach Figur 2 sind als Lichtquellen Leuchtdioden, weiterhin LEDs genannt, verwendet. Es sind jedoch auch andere Lichtquellen, wie z.B. Glüh- oder Entladungslampen oder organische LED verwendbar, falls geeignete Leistungsversorgungen bereitgestellt werden.

Die erste Gruppe G1 von Lichtquellen setzt sich aus 2 parallel geschalteten Untergruppen UG1 und UG2 zusammen. Die Untergruppen können wahlweise auch seriell verschaltet sein. Jede Untergruppe UG1, UG2 besteht im Beispiel aus der Serienschaltung von 3 LEDs. Die Untergruppen UG1, UG2 können auch aus einer unterschiedliche Zahl von LEDs bestehen, die seriell oder parallel geschaltet sind.

Die zweite Gruppe G2 von Lichtquellen besteht im Beispiel aus der Serienschaltung von 3 LEDs. Die Erfindung ist jedoch auch mit einer beliebigen Anzahl von seriell oder parallel verschalteten LEDs ausführbar. Die Anzahl der LEDs in der jeweiligen Gruppe oder Untergruppe bestimmt den Lichtstromanteil, den sie zum gesamten Lichtstrom der Beleuchtungseinrichtung beiträgt.

In der folgenden Tabelle sind bevorzugte Ausführungen der Gruppen bzw. Untergruppen von Lichtquellen bezüglich Farbe, abgestrahlter Wellenlänge und Lichtstromanteil zusammengefasst:

| | | | |
|---|---|---|---|
| | *Farbe* | *Wellenlänge λ* | *Lichtstromanteil* |
| UG1 | rot | 617nm | 51% |
| UG2 | grün | 525nm | 36% |
| G2 | blau | 470nm | 13% |

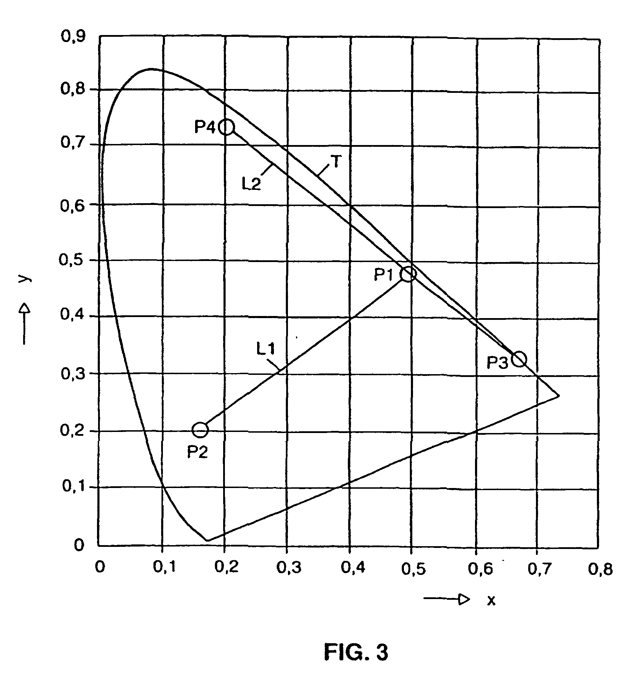

In Figur 3 werden die in obiger Tabelle angegebenen Werte innerhalb einer Normfarbtafel veranschaulicht. Der Punkt P2 repräsentiert die Farbe der zweiten Gruppe G2 von Lichtquellen. Der Punkt P3 repräsentiert die Farbe der ersten Untergruppe UG 1 von Lichtquellen. Der Punkt P4 repräsentiert die Farbe der zweiten Untergruppe UG2 von Lichtquellen. Vorteilhaft werden die Farben der Lichtquellen so gewählt, dass das Dreieck P2,P3,P4 eine möglichst große Fläche aufspannt. Damit besteht eine große Auswahl von einstellbaren Farben.

Durch den Punkt P2 wird eine Dimmspur L1 gelegt, auf der im wesentlichen die Farben liegen, die die Beleuchtungseinrichtung abstrahlen soll. Die Dimmspur L1 schneidet im Punkt P1 die Linie L2, die die Punkte P3 und P4 verbindet. Auf der Linie L2 liegen alle Farben, die die erste Gruppe G 1 von Lichtquellen abstrahlen kann. Das Verhältnis der Helligkeit der ersten und zweiten Untergruppe UG1, UG2 muss nun so gewählt werden, dass die Farbe des abgestrahlten Lichts der ersten Gruppe G 1 auf den Punkt P1 zu liegen kommt.

Mit der zweiten Einstellvorrichtung E2 kann im dargestellten Beispiel nun eine beliebige Farbe auf der Dimmspur L1 zwischen Punkt P1 und Punkt P2 eingestellt werden.

Für allgemeine Beleuchtungszwecke schneidet die Dimmspur L1 vorteilhaft den Bereich der Normfarbtafel, der nahezu weißer Farbe entspricht. Mit der zweiten Einstellvorrichtung E2 können dann verschiedene Weisstöre eingestellt werden. Im Beispiel schmiegt sich die in Figur 1 dargestellte D-Linie an die Dimmspur L1 an. Dadurch kann die Beleuchtungseinrichtung verschiedene Tageslichteindrücke simulieren.

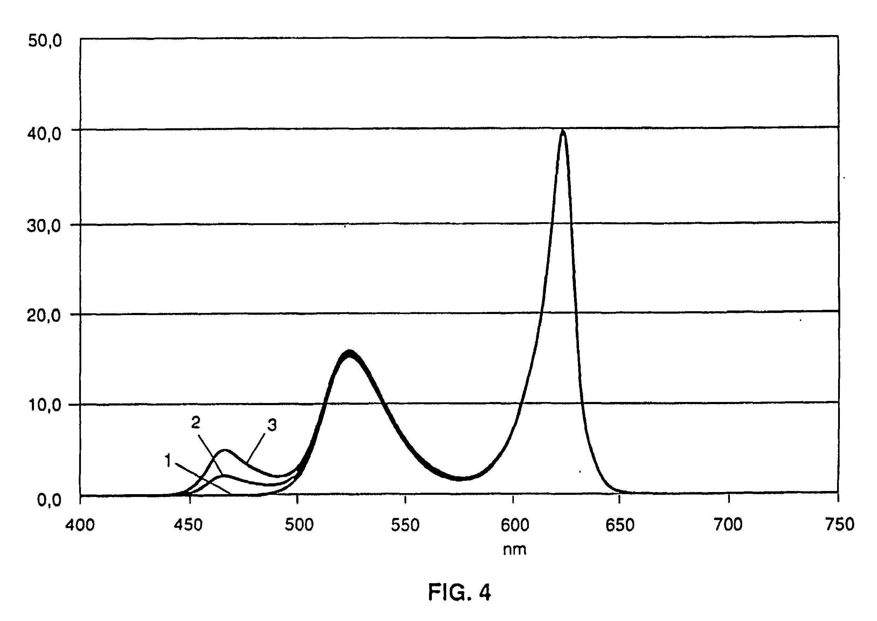

Figur 4 zeigt das Spektrum des Lichts einer Beleuchtungseinrichtung, wie sie im Ausführungsbeispiel beschriebenen ist. Auf der Abszisse ist die Wellenlänge λ in nm (Nanometer) angegeben. Auf der Ordinate ist eine beliebig skalierte relative Intensität angegeben.

Dargestellt sind drei Spektren 1, 2, 3 für drei unterschiedliche Einstellungen der zweiten Einstellvorrichtung E2:

Beim Spektrum 1 ist die Helligkeit der zweiten Gruppe G2 von Lichtquellen mittels der zweiten Einstellvorrichtung E2 auf nahezu Null reduziert. Die abgestrahlte Farbe der Beleuchtungseinrichtung befindet sich dem entsprechend auf dem Punkt P1 in Figur 3.

Beim Spektrum 3 ist die Helligkeit der zweiten Gruppe G2 von Lichtquellen mittels der zweiten Einstellvorrichtung E2 auf einen Maximalwert eingestellt. Die abgestrahlte Farbe der Beleuchtungseinrichtung befindet sich dem entsprechend nahe dem Punkt P2 in Figur 3.

Beim Spektrum 2 ist die Helligkeit der zweiten Gruppe G2 von Lichtquellen mittels der zweiten Einstellvorrichtung E2 auf einen mittleren Wert eingestellt. Die abgestrahlte Farbe der Beleuchtungseinrichtung befindet sich dem entsprechend im mittleren Bereich der Dimmspur L1.

Der Vergleich der Spektren 1, 2 und 3 zeigt, dass sich die Gesamthelligkeit der Beleuchtungseinrichtung durch die zweite Einstellvorrichtung E2 nicht wesentlich beeinflussen lässt. Die Farben der Lichtquellen sind demnach vorteilhaft so gewählt, dass eine Veränderung der Farbe des von der Beleuchtungseinrichtung abgestrahlten Lichts keine wesentliche Helligkeitsänderung bewirkt.

## Patentansprüche

1. Schaltungsanordnung für eine Beleuchtungseinrichtung, wobei die Schaltungsanordnung folgende Merkmalen aufweist:
• Anschlussvorrichtung (S) für eine erste (G1) und eine zweite (G2) Gruppe von Lichtquellen,
• eine erste (CON, PWM1) und eine zweite (CON, PWM2) Leistungsversorgung,
• wobei die erste Leistungsversorgung (CON, PWM1) eine einstellbare Leistungsabgabe über die Anschlussvorrichtung (S) an die erste Gruppe (G1) von Lichtquellen ermöglicht und die zweite Leistungsversorgung (CON, PWM2) eine einstellbare Leistungsabgabe über die Anschlussvorrichtung (S) an die zweite Gruppe (G2) von Lichtquellen ermöglicht,
• eine erste (E1) und eine zweite (E2) Einstellvorrichtung,
• wobei mit der ersten Einstellvorrichtung (E1) die Leistungsabgabe der ersten (CON, PWM1) und gleichzeitig der zweiten (CON, PWM2) Leistungsversorgung einstellbar ist,
• während mit der zweiten Einstellvorrichtung (E2) lediglich die Leistungsabgabe der zweiten Leistungsversorgung (CON, PWM2) einstellbar ist,
**dadurch gekennzeichnet, dass**
die erste Einstellvorrichtung (E1) ein erstes und ein zweites Potentiometer enthält, die gleichzeitig bedient werden, wobei mit dem ersten Potentiometer die Leistungsabgabe der ersten Leistungsversorgung (CON, PWM1) einstellbar ist und mit dem zweiten Potentiometer die Leistungsabgabe der zweiten Leistungsversorgung (CON, PWM2) einstellbar ist,
während die zweite Einstellvorrichtung (E2) ein Potentiometer enthält, das parallel zum zweiten Potentiometer der ersten Einstellvorrichtung (E1) geschaltet ist.

2. Schaltungsanordnung gemäß Anspruch 1,
**dadurch gekennzeichnet, dass**
die Leistungsabgabe der ersten (CON, PWM1) und der zweiten (CON, PWM2) Leistungsversorgung mittels Pulsweitenmodulation einstellbar ist.

3. Schaltungsanordnung gemäß Anspruch 1,
**dadurch gekennzeichnet, dass**
die Anschlussvorrichtung (S) für die erste und die zweite Gruppe von Lichtquellen ein gemeinsames Bezugspotenzial aufweist.

4. Beleuchtungseinrichtung, die eine Schaltungsanordnung gemäß Anspruch 1 umfasst, wobei an die Anschlussvorrichtung (S) eine erste (G1) und eine zweite (G2) Gruppe von Lichtquellen angeschlossen ist,
**dadurch gekennzeichnet, dass**
die erste Gruppe (G1) von Lichtquellen eine erste Farbe abstrahlt und die zweite Gruppe (G2) von Lichtquellen eine zweite Farbe abstrahlt, wobei die erste und die zweite Farbe unterschiedlich sind.

5. Beleuchtungseinrichtung gemäß Anspruch 4,
**dadurch gekennzeichnet, dass**
die Farben der Gruppen (G1, G2) von Lichtquellen so gewählt sind, dass die zweite Einstellvorrichtung (E2) eine Einstellung ermöglicht, bei der die Beleuchtungseinrichtung weißes Licht abstrahlt.

6. Beleuchtungseinrichtung gemäß Anspruch 4,
**dadurch gekennzeichnet, dass**
sich mindestens eine Gruppe (G1, G2) von Lichtquellen die verschieden farbige Untergruppen (UG1, UG2) von Lichtquellen enthält, die parallel oder seriell verschaltet sind.

7. Beleuchtungseinrichtung gemäß Anspruch 6,
**dadurch gekennzeichnet, dass**
die sich die erste Gruppe (G 1) von Lichtquellen aus einer Untergruppe (UG1) mit roter und einer Untergruppe (UG2) mit grüner Farbe zusammensetzt, während die zweite Gruppe (G2) von Lichtquellen blaue Farbe abstrahlt.

8. Beleuchtungseinrichtung gemäß Anspruch 7,
**dadurch gekennzeichnet, dass**
die Untergruppe (UG1) mit roter Farbe Licht von einer Wellenlänge im Bereich von 617nm abstrahlt,
die Untergruppe (UG2) mit grüner Farbe Licht von einer Wellenlänge im Bereich von 525nm abstrahlt und
während die zweite Gruppe (G2) von Lichtquellen Licht von einer Wellenlänge im Bereich von 470nm abstrahlt.

9. Beleuchtungseinrichtung gemäß Anspruch 8,
**dadurch gekennzeichnet, dass**
für den Fall, dass die Einstellvorrichtungen (E1, E2) Einstellungen aufweisen, die eine maximale Leistungsabgabe der Leistungsversorgungen ((CON, PWM1), (CON, PWM1)) bewirken,
bezogen auf einen Gesamtlichtstrom der Beleuchtungseinrichtung,
die Untergruppe (UG1) mit roter Farbe einen Anteil im Bereich von 51 %
die Untergruppe (UG2) mit grüner Farbe einen Anteil im Bereich von 36%
und die zweite Gruppe (G2) von Lichtquellen einen Anteil im Bereich von 13% aufweist.

10. Beleuchtungseinrichtung gemäß einem der Ansprüche 4 bis 9,
**dadurch gekennzeichnet, dass**
die Lichtquellen LEDs sind.

## Claims

1. Circuit arrangement for an illumination device, the circuit arrangement having the following features:
• connection apparatus (S) for a first (G1) and a second (G2) group of light sources,
• a first (CON, PWM1) and a second (CON, PWM2) power supply,
• the first power supply (CON, PWM1) making it possible to set the power output via the connection apparatus (S) to the first group (G1) of light sources and the second power supply (CON, PWM2) making it possible to set the power output via the connection apparatus (S) to the second group (G2) of light sources,
• a first (E1) and a second (E2) setting apparatus,
• it being possible to use the first setting apparatus (E1) to set the power output of the first (CON, PWM1) and, at the same time, the second (CON, PWM2) power supply,
• whereas the second setting apparatus (E2) may be used to set only the power output of the second power supply (CON, PWM2),
**characterized in that** the first setting apparatus (E1) contains a first and a second potentiometer, which are operated simultaneously, it being possible to use the first potentiometer to set the power output of the first power supply (CON, PWM1), and to use the second potentiometer to set the power output of the second power supply (CON, PWM2), whereas the second setting apparatus (E2) contains one potentiometer which is connected in parallel with the second potentiometer of the first setting apparatus (E1).

2. Circuit arrangement according to Claim 1, **characterized in that** the power output of the first (CON, PWM1) and the second (CON, PWM2) power supply can be set by means of pulse width modulation.

3. Circuit arrangement according to Claim 1, **characterized in that** the connection apparatus (S) has a common reference potential for the first and the second groups of light sources.

4. Illumination device which comprises a circuit arrangement according to Claim 1, a first (G1) and a second (G2) group of light sources being connected to the connection apparatus (S), **characterized in that** the first group (G1) of light sources radiates a first colour and the second group (G2) of light sources radiates a second colour, the first and the second colours being different.

5. Illumination device according to Claim 4, **characterized in that** the colours of the groups (G1, G2) of light sources are selected such that the second setting apparatus (E2) makes it possible to set the illumination device such that it emits white light.

6. Illumination device according to Claim 4, **characterized in that** at least one group (G1, G2) of light sources contains the differently coloured subgroups (UG1, UG2) of light sources, which are connected in parallel or in series.

7. Illumination device according to Claim 6, **characterized in that** the first group (G1) of light sources is made up of a subgroup (UG1) having the colour red and a subgroup (UG2) having the colour green, whereas the second group (G2) of light sources radiates the colour blue.

8. Illumination device according to Claim 7, **characterized in that** the subgroup (UG1) having the colour red radiates light of a wavelength in the region of 617 nm, and the subgroup (UG2) having the colour green radiates light of a wavelength in the region of 525 nm, whereas the second group (G2) of light sources radiates light of a wavelength in the region of 470 nm.

9. Illumination device according to Claim 8, **characterized in that** in the event that the setting apparatuses (E1, E2) have settings which effect a maximum power output of the power supplies ((CON, PWM1), (CON, PWM2)), based on a total luminous flux of the illumination device, the subgroup (UG1) having the colour red has a component in the region of 51%, the subgroup (UG2) having the colour green has a component in the region of 36%, and the second group (G2) of light sources has a component in the region of 13%.

10. Illumination device according to one of Claims 4 to 9, **characterized in that** the light sources are LEDs.

## Revendications

1. Montage pour un dispositif d'éclairage dans lequel le montage a les caractéristiques suivantes :
. un dispositif (S) de connexion d'un premier groupe (G1) et d'un deuxième groupe (G2) de sources de lumière,
. une première alimentation (CON, PWM1) et une deuxième alimentation (CON, PWM2) de puissance,
. la première alimentation (CON, PWM1) de puissance permettant de céder de la puissance de manière réglable par l'intermédiaire du dispositif (S) de connexion au premier groupe (G1) de sources lumineuses et la deuxième alimentation (CON, PWN2) de puissance permettant de céder de la puissance de manière réglable par l'intermédiaire du dispositif (S) de connexion au deuxième groupe (G2) de sources lumineuses,
. un premier dispositif (E1) et un deuxième dispositif (E2) de réglage,
. la puissance cédée par la première alimentation (CON, PWM1) et en même temps par la deuxième alimentation (CON, PWM2) de puissance pouvant être réglée par le premier dispositif (E1) de réglage,
. tandis que seule la puissance cédée par la deuxième alimentation (CON, PWM2) de puissance peut être réglée par le deuxième dispositif (E2) de réglage,
**caractérisé en ce que**
le premier dispositif (E1) de réglage comporte un premier et un deuxième potentiomètre qui sont mis en service en même temps, la puissance cédée par la première alimentation (CON, PWM1) de puissance pouvant être réglée par le premier potentiomètre et la puissance cédée par la deuxième alimentation (CON, PWM2) de puissance pouvant être réglée par le deuxième potentiomètre,
tandis que le deuxième dispositif (E2) de réglage a un potentiomètre qui est monté en parallèle avec le deuxième potentiomètre du premier dispositif (E1) de réglage.

2. Montage suivant la revendication 1,
**caractérisé en ce que**
la puissance cédée par la première alimentation (CON, PWM1) de puissance et par la deuxième alimentation (CON, PWM2) de puissance peut être réglée au moyen d'une modulation en largeur d'impulsion.

3. Montage suivant la revendication 1,
**caractérisé en ce que**
le dispositif (S) de connexion du premier et du deuxième groupe de sources lumineuses a un potentiel de référence commun.

4. Dispositif d'éclairage qui comprend un montage suivant la revendication 1, dans lequel il est raccordé au dispositif (S) de connexion un premier groupe (G1) et un deuxième groupe (G2) de sources de lumière,
**caractérisé en ce que**
le premier groupe (G1) de sources de lumière émet une première couleur et le deuxième groupe (G2) de sources de lumière émet une deuxième couleur, la première et la deuxième couleur étant différentes.

5. Dispositif d'éclairage suivant la revendication 4,
**caractérisé en ce que**
les couleurs des groupes (G1, G2) de sources de lumière sont choisies de façon à ce que le deuxième dispositif (E2) de réglage permette un réglage dans lequel le dispositif d'éclairage émet de la lumière blanche.

6. Dispositif d'éclairage suivant la revendication 4,
**caractérisé en ce que**
au moins un groupe (G1, G2) de sources de lumière contient au moins les divers sous-groupes (UG1, UG2) colorés de sources de lumière qui sont montés en parallèle ou en série.

7. Dispositif d'éclairage suivant la revendication 6,
**caractérisé en ce que**
le premier groupe (G1) de sources de lumière est composé d'un sous-groupe (UG1) ayant une couleur rouge et d'un sous-groupe (UG2) ayant une couleur verte, tandis que le deuxième groupe (G2) de sources de lumière émet de la lumière bleue.

8. Dispositif d'éclairage suivant la revendication 7,
**caractérisé en ce que**
le sous-groupe (UG1) à couleur rouge émet de la lumière d'une longueur d'onde de l'ordre de 617 nm,
le sous-groupe (UG2) à couleur verte émet de la lumière d'une longueur d'onde de l'ordre de 525 nm et
tandis que le deuxième groupe (G2) de sources de lumière émet de la lumière d'une longueur d'onde de l'ordre de 470 nm.

9. Dispositif d'éclairage suivant la revendication 8,
**caractérisé en ce que**
dans le cas où les dispositifs (E1, E2) de réglage ont des réglages qui font que les alimentations ((CON, PWM1), (CON, PWM2)) cèdent un maximum de puissance,
le sous-groupe (UG1) à couleur rouge représente, rapportée à un flux lumineux total du dispositif d'éclairage, une proportion de l'ordre de 51 %,
le sous-groupe (UG2) à couleur verte représente, rapportée à un flux lumineux total du dispositif d'éclairage, une proportion de l'ordre de 36 %,
et le deuxième groupe (G2) de sources de lumière représente, rapportée à un flux lumineux total du dispositif d'éclairage, une proportion de l'ordre de 13 %.

10. Dispositif d'éclairage suivant l'une des revendications 4 à 9,
**caractérisé en ce que**
les sources de lumière sont des diodes électroluminescentes.
